# EUROPÄISCHE PATENTSCHRIFT

(11) **EP 2 668 048 B1**
(45) Veröffentlichungstag und Bekanntmachung des Hinweises auf die Patenterteilung: **13.03.2019**
(21) Anmeldenummer: 12700929.8
(22) Anmeldetag: 12.01.2012
(51) Int. Cl.: B60G 11/23, B60G 15/06, B60G 17/02, B60G 13/14, B60G 17/08, F16F 15/03, H02K 7/116

(54) **ELEKTRISCHER DÄMPFER**
ELECTRIC DAMPER
AMORTISSEUR ÉLECTRIQUE

(30) Priorität: 27.01.2011 DE 102011009608
(43) Veröffentlichungstag der Anmeldung: 04.12.2013
(73) Patentinhaber: Audi AG, 85045 Ingolstadt (DE)
(72) Erfinder: WILLEMS, Marco, 85053 Ingolstadt (DE)
(74) Vertreter: Reichert, Thomas Klaus
(86) Internationale Anmeldenummer: PCT/EP2012/000113
(87) Internationale Veröffentlichungsnummer: WO 2012/100910

(56) Entgegenhaltungen:
- EP-A1- 2 062 757
- US-A- 1 752 844
- US-A1- 2010 207 309

## Beschreibung

Die Erfindung betrifft einen elektrischen Dämpfer zum Dämpfen der Relativbewegung zwischen einer ersten und einer zweiten Masse, umfassend einen durch die Massenbewegung angetriebenen Generator mit einem feststehenden Stator und einem relativ dazu drehbaren Rotor, und ein mit dem Generator gekoppeltes Getriebe.

Es ist in vielen Bereichen der Technik erforderlich, Relativbewegungen zwischen zwei Bauteilen eines schwingungsfähigen mechanischen Systems zu dämpfen. Ein Beispiel, das jedoch keinesfalls beschränkend ist, ist die Schwingungsdämpfung an einer Kraftfahrzeugkarosserie im Bereich der Aufhängung der Karosserie am Fahrwerk. Hierzu werden vornehmlich hydraulische Dämpfer eingesetzt. Diese sind jedoch nicht in der Lage, die dem System beim Dämpfen entzogene Energie zu gewinnen respektive nutzbar zu machen.

Zu diesem Zweck wurden sogenannte, sich des Prinzips der magnetischen Induktion bedienende elektrische Dämpfer vorgeschlagen, welche die dem System durch die Massenbewegung entzogene mechanische Energie über einen Generator in elektrische Energie umwandeln. Sonach kann die durch die Massenbewegung entstehende mechanische Energie einer weiteren Nutzung zugeführt werden. Gleichermaßen kann durch das Ansteuern des Generators die Dämpfung auf einfache Weise und über einen weiten Verstellbereich entsprechend den Erfordernissen des schwingungsfähigen mechanischen Systems angepasst werden. Ein elektrischer Dämpfer bekannter Bauart ist beispielsweise aus DE 101 15 858 A1 rund US 2010/0207309 A1 bekannt.

Die aus dem Stand der Technik bekannten elektrischen Dämpfer weisen jedoch einen vergleichsweise komplexen konstruktiven Aufbau auf.

Der Erfindung liegt das Problem zugrunde, einen demgegenüber, insbesondere bezüglich des konstruktiven Aufbaus verbesserten elektrischen Dämpfer anzugeben.

Zur Lösung dieses Problems ist ein elektrischer Dämpfer der eingangs genannten Art vorgesehen, der sich dadurch auszeichnet, dass durch die Massenbewegung wenigstens ein direkt mit einem durch die Massenbewegung bewegbaren Hebeelement verbundenes erstes Getriebeelement in eine Drehbewegung versetzt wird, welches erste Getriebeelement mit wenigstens einem weiteren Getriebeelement direkt oder indirekt übersetzt bewegungsgekoppelt ist, wobei das zweite Getriebeelement mit dem Rotor des Generators bewegungsgekoppelt ist, derart, dass eine Drehbewegung des Rotors relativ zum Stator erfolgt.

Der erfindungsgemäße elektrische Dämpfer weist einen besonders einfachen konstruktiven Aufbau auf und lässt sich ohne Aufwand beispielsweise an eine Fahrzeugkarosserie eines Kraftfahrzeugs anbinden. Das Funktionsprinzip des elektrischen Dämpfers beruht auf der Kopplung eines Generators bestehend aus einem feststehenden Stator und einem relativ dazu drehbaren Rotor mit einem Getriebe, wobei das Abtriebselement des Getriebes in Form des zweiten Getriebeelements eine über das direkt mit dem als Antriebselement zu verstehende ersten Getriebeelement gekoppelte Hebelelement eingebrachte Drehbewegung auf den Rotor überträgt. Die über das zweite Getriebeelement in den Rotor eingeleitete Rotationsbewegung bedingt die Dämpfung über den Generator sowie die Rückgewinnung bzw. Umwandlung der ursprünglich aus der Massenbewegung resultierenden mechanischen Dämpfungsenergie in den generatorseitig erzeugten Strom.

Dabei können die beiden Getriebeelemente direkt oder indirekt übersetzt sein. Mithin können für den Fall, dass das Getriebe als Übersetzungsgetriebe ausgebildet ist, in Abhängigkeit des Übersetzungsverhältnisses vergleichsweise kleine Bewegungen des ersten Getriebeelements in hohe Drehzahlen des zweiten Getriebeelements und folglich des mit diesem bewegungsgekoppelten Rotors umgesetzt und demnach bereits durch vergleichsweise geringe Massebewegungen gute Dämpfungseigenschaften bzw. eine merkliche Stromerzeugung erzielt werden.

Bekanntermaßen für elektrische Generatoren erforderliche Felderzeugungsmittel können entweder am Stator oder am Rotor vorgesehen sein, so dass der Strom entweder rotorseitig oder statorseitig generiert wird. Beispielsweise können am Stator als Felderzeugungsmittel mehrere Wicklungen vorgesehen sein, die eine Fremderregung zulassen, welche Wicklungen zur Erzeugung des Magnetfelds zu bestromen sind. Alternativ ist es denkbar, am Stator mehrere permanentmagnetische Elemente zur Eigenerregung vorzusehen. Am Rotor können als Stromerzeugungsmittel mehrere Wicklungen zur Führung des erzeugten Stroms vorgesehen sein, das heißt der Strom wird rotorseitig induziert. Über die Wicklungen kann der Strom ferner abgegriffen und beispielsweise in ein Bordnetz eines Kraftfahrzeugs, an dem der elektrische Dämpfer verbaut ist, eingespeist werden.

Der Generator weist erfindungsgemäss ein hohlzylindrisches Gehäuse auf, wobei ein erster Gehäuseabschnitt den Rotor und den Stator aufnimmt und ein zweiter Gehäuseabschnitt an das Getriebe anschließt. Es handelt sich somit bei dem Generator um eine zylindrische Einheit, welche besonders kompakt ausgebildet ist und wenig Bauraum beansprucht, was insbesondere in Fällen, in denen der elektrische Dämpfer als Stoßdämpfer eines Kraftfahrzeugs ausgebildet ist, Vorteile hat, da insbesondere der Platz im Radkasten eines Kraftfahrzeugs üblicherweise eng bemessen ist. Der erste Gehäuseabschnitt bietet im Wesentlichen Platz für die Aufnahme des Generators, der zweite Gehäuseabschnitt dient vornehmlich der Anbindung des Gehäuses an das Getriebe. In Ausnahmefällen kann der Generator auch eine andere als die genannte hohlzylindrische Form einnehmen. Grundsätzlich ist das Gehäuse gegebenenfalls über ein oder mehrere zwischengeschaltete elastische Dämpfungselemente wie Elastomerlager oder dergleichen, feststehend ausgebildet, mithin also beispielsweise fest mit der Karosserie eines Kraftfahrzeugs verbunden.

Bevorzugt ist der Stator gehäuseinnenwandseitig angeordnet. Der Stator respektive dessen Bestandteile kann bzw. können dabei mit Bezug auf die hohlzylindrische Form des Gehäuses umfangsmäßig über die Innenwand des Gehäuses verteilt angeordnet sein. Selbstverständlich weist die Innenwand des Gehäuses entsprechende Aufnahmemittel oder Aufnahmeabschnitte für den Stator respektive die Statorkomponenten auf. Auch eine wenigstens teilweise integrale Ausführung des Stators mit dem Gehäuse ist denkbar. Das Gehäuse weist vorteilhaft eine nach außen im Wesentlichen geschlossene, kompakte Form auf.

Der Rotor weist vorteilhaft eine zylindrische Grundform auf. Sonach folgt die Form des Rotors im Wesentlichen der Form des Generatorgehäuses, was der erwähnten besonders kompakten Bauweise des Generators und im Weiteren des elektrischen Dämpfers insgesamt zuträglich ist. In Ausnahmefällen kann der Rotor auch in anderen, zum Verbau in dem Gehäuse geeigneten Formen ausgebildet sein.

Zweckmäßig ist das Gehäuse außenseitig über wenigstens ein Lagerelement, insbesondere ein Wälzlager, mit dem Getriebe verbunden. Somit ist sichergestellt, dass sich Bewegungen, insbesondere Drehbewegungen, des Getriebes bzw. dessen Bestandteile, das heißt im Wesentlichen des ersten bzw. des zweiten Getriebeelements, nicht auf das grundsätzlich feststehende Gehäuse übertragen. Als Lagerelemente können verschiedene Arten von Wälzlagern vorgesehen sein.

Dem Getriebe ist erfindungsgemäss ein ringförmiger, das Gehäuse axial wenigstens abschnittsweise umgreifender, wenigstens abschnittsweise an der Gehäuseaußenseite anliegender Abschnitt zugeordnet. Der ringförmige Abschnitt, welcher beispielsweise einstückig mit einem feststehenden Teil des Getriebes ausgebildet sein kann, dient folglich der Anbindung des Getriebes an den Generator respektive das Generatorgehäuse. Gegebenenfalls ist auch ein Presssitz denkbar, weshalb der ringförmige Abschnitt des Getriebes in dem Gehäuseinnenraum eingepresst wird. Selbstverständlich sind auch andere kraft- und/oder formschlüssige, lösbare oder unlösbare Verbindungsmöglichkeiten zur Anbindung des ringförmigen Abschnitts an das Generatorgehäuse denkbar.

Vorteilhaft weist das Getriebeelement wenigstens einen Axialzapfen auf, der, insbesondere über einen Eingriff in eine rotorseitige axial verlaufende Aufnahme, drehfest mit dem Rotor verbunden ist. Der Axialzapfen dient im Sinne einer Welle der Übertragung des an dem zweiten Getriebeelement anliegenden Drehmoments auf den Rotor und somit der Bewegungskopplung zwischen Getriebe und Rotor. Der Axialzapfen kann über unterschiedliche, insbesondere kraft- und/oder formschlüssige Verbindungen, lösbar oder unlösbar mit dem zweiten Getriebeelement respektive der rotorseitigen Aufnahme verbunden sein.

Das erfindungsgemäße Prinzip ist mit unterschiedlichen Getrieben kompatibel, von welchem nachfolgend bevorzugte beispielhafte Ausführungsformen dargestellt werden.

Das Getriebe kann etwa als Planetengetriee mit einem Hohlrad, wenigstens zwei mit dem Hohlrad kämmenden Planetenrädern und einem mit den Planetenrädern kämmenden Sonnenrad ausgebildet sein, wobei das Hohlrad das erste Getriebeelement und das mit dem Rotor bewegungsgekoppelte Sonnenrad das zweite Getriebeelement bildet. Entsprechend wird die vom Hebelelement über das Hohlrad eingebrachte Drehbewegung über die mit diesem kämmenden lagefesten Planetenräder auf das Sonnenrad übertragen, welches Sonnenrad mit dem Rotor bewegungsgekoppelt ist. Übersetzungen erfolgen insbesondere über unterschiedliche Dimensionierungen bzw. Anzahlen der Planetenräder.

Alternativ kann das Getriebe ein Spannungswellengetriebe mit einer ring- oder zylinderförmigen flexiblen Einheit mit einer Außenverzahlung, einer das erste Getriebeelement bildenden starren Einheit mit einer mit der Außenverzahnung der flexiblen Einheit kämmenden Innenverzahnung und einem im Inneren der flexiblen Einheit angeordneten, mit der flexiblen Einheit, diese deformierend, zusammenwirkenden, mit dem Rotor bewegungsgekoppelten und das zweite Getriebeelement bildenden ovalen Drehelement sein. Spannungswellengetriebe bzw. Harmonic-Drive-Getriebe zeichnen sich bekanntermaßen durch hohe Übersetzungen, hohe Steifigkeit, kompakten Bauraum sowie geringes Spiel aus.

Das Grundprinzip eines Spannungswellengetriebes umfasst einen innenverzahnten starren Ring (circular spline), in dessen Inneren sich koaxial eine ringförmige außenverzahnte flexible Einheit (flex spline) befindet. Im Inneren der flexiblen Einheit wiederum ist ein als Auslenkgenerator dienendes ovales Drehelement (wave generator) angeordnet, das die flexible Einheit ellipsenförmig so deformiert, dass deren Außenverzahnung mit der Innenverzahnung der starren Einheit insbesondere im Bereich der großen Ellipsenachse an zwei gegenüberliegenden Stellen in Eingriff kommt. Mithin kann sich das ovale Drehelement relativ zur flexiblen Einheit drehen, wobei die Zahneingriffsbereiche rotatorisch umlaufen. Üblicherweise weist die Innenverzahnung der starren Einheit zwei Zähne mehr als die Außenverzahnung der flexiblen Einheit auf. Entsprechend führt eine Drehung des ovalen Drehelements beispielsweise um 90° im Uhrzeigersinn um dessen Rotationsachse zu einer Drehung der flexiblen Einheit entgegen dem Uhrzeigersinn um eine halbe Zahnbreite relativ zu dem starren Ring.

Gemäß dem vorliegenden Dämpfer erfolgt eine Übertragung der Bewegung des Hebelelements direkt auf die starre Einheit, welche eine entsprechend der Ausbildung der jeweiligen Außen- bzw. Innenverzahnungen übersetzte Drehbewegung an die flexible Einheit und sonach mittelbar an das ovale Drehelement und weiter durch die Bewegungskopplung des ovalen Drehelements mit dem Rotor auf diesen überträgt.

Im Falle eines Spannungswellengetriebes ist bevorzugt zwischen dem ersten und dem zweiten Getriebeelement ein flexibles Wälzlager, insbesondere ein Rollen- oder Nadellager, angeordnet. Entsprechend ist ein besonders leichtgängiges Abwälzen des ovalen Drehelements auf der flexiblen Einheit möglich, wodurch die Reibung zwischen diesen beiden Getriebeelementen erheblich reduziert werden kann.

Das Getriebe kann daneben auch als Zykloidgetriebe ausgebildet sein. Das Zykloidgetriebe umfasst dabei eine ring- oder zylinderförmige Einheit, die mit einer randseitig zahnartig profilierten Kurvenscheibe verbunden ist, die ihrerseits mit einem zahnartig profilierten feststehenden Gehäuseteil kämmt, wobei die ring- oder zylinderförmige Einheit das erste Getriebeelement bildet und an der Kurvenscheibe, vorzugsweise in einer Bohrung, das in das erste Getriebeelement eingreifende, mit dem Rotor bewegungsgekoppelte zweite Getriebeelement angeordnet ist.

Zykloidgetriebe ermöglichen ebenfalls hohe Übersetzungen, so dass bereits geringe Winkeldrehungen des ersten Getriebeelements hoch übersetzt auf das zweite Getriebeelement und weiter auf den Rotor übertragen werden können. Das zweite Getriebeelement ist hier bevorzugt zentrisch an einer außenseitig wellenförmig profilierten Kurvenscheibe angeordnet, die sich innerhalb eines feststehenden Gehäuserings, der eine entsprechende Gegenverzahnung aufweist, dreht, jedoch in dieser radial beweglich ist. Mit der Kurvenscheibe ist ferner das erste Getriebeelement, das heißt die ring- oder zylinderförmige Einheit, gekoppelt, die entsprechende Kopplungszapfen aufweist, die in vom Durchmesser her größere Bohrungen der Kurvenscheibe eingreifen, so dass diese bei drehachsfester Anordnung des ersten Getriebeelements Radialbewegungen durchführen kann.

Eine weitere beispielhafte Ausführungsform eines Getriebes stellt ein Stirnradgetriebe dar. Dieses weist wenigstens zwei über Außenverzahnungen in Eingriff stehende Zahnräder auf, wobei ein erstes Zahnrad das erste Getriebeelement und ein mit dem ersten Zahnrad unmittelbar oder mittelbar über ein oder mehrere zwischen diesen geschaltete Zahnräder bewegungsgekoppeltes, mit dem Rotor bewegungsgekoppeltes weiteres Zahnrad das zweite Getriebeelement bildet. In Abhängigkeit der Dimensionierung respektive der Anzahl und Anordnungen an eingesetzten Zahnrädern lassen sich hohe Übersetzungen einstellen, weshalb auch bei Stirnradgetrieben kleine Bewegungen des ersten Getriebeelements zu großen, weiter auf den Rotor übertragene Bewegungen des zweiten Getriebeelements führen können. Weitere Vorteile, Merkmale und Einzelheiten der Erfindung ergeben sich aus den im Folgenden beschriebenen Ausführungsbeispielen sowie anhand der Zeichnungen. Dabei zeigen:
- Fig. 1: eine Prinzipdarstellung eines elektrischen Dämpfers gemäß einer beispielhaften Ausführungsform; und
- Fig. 2: eine Prinzipdarstellung einer möglichen Verbausituation eines elektrischen Dämpfers im Bereich einer Kraftfahrzeugachse.

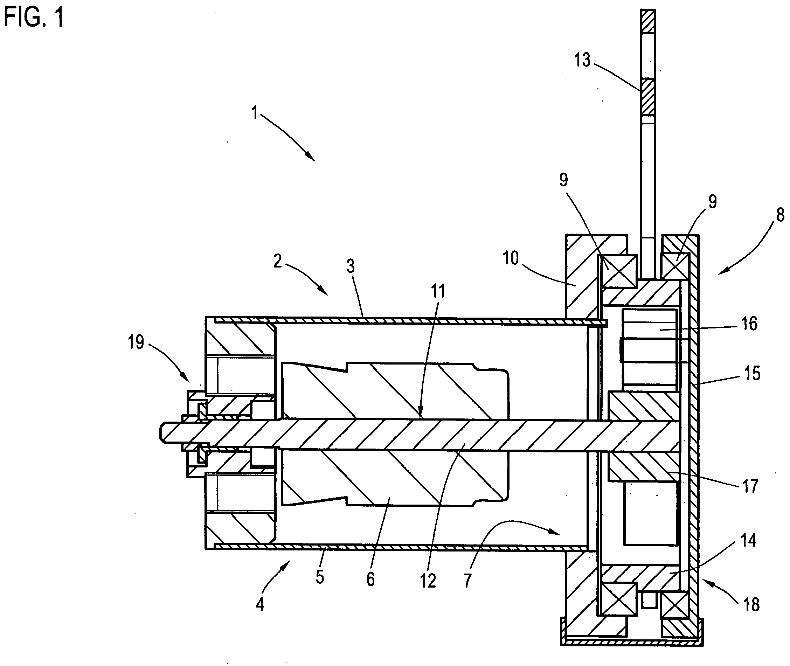

Fig. 1 zeigt eine Prinzipdarstellung eines elektrischen Dämpfers 1 zum Dämpfen einer Relativbewegung zwischen einer ersten und einer zweiten Masse (beide nicht gezeigt) gemäß einer beispielhaften Ausführungsform der Erfindung. Der Dämpfer 1 umfasst einen durch die Massenbewegung angetriebenen Generator 2 mit einem in einem ersten Gehäuseabschnitt 4 eines hohlzylindrischen Gehäuses 3 gehäuseinnenwandseitig integrierten feststehenden Stator 5 und einem relativ dazu drehbaren zylindrischen Rotor 6. Das Gehäuse 3 schließt über einen zweiten Gehäuseabschnitt 7 an ein mit dem Generator 2 gekoppeltes Getriebe 8, welches beispielsweise als Planetengetriebe ausgebildet ist, an. Wie oben erwähnt, sind neben der Ausführung des Getriebes 8 als Planetengetriebe selbstverständlich auch andere Getriebearten im Rahmen der Erfindung vorstellbar.

Das Gehäuse 3 ist beispielsweise nicht drehbar, gegebenenfalls unter Zwischenschaltung von Elastomerlagern (nicht gezeigt) an einem Fahrzeugaufbau angeordnet. Die Anbindung an das Getriebe 8 erfolgt über Lagerelemente 9 in Form von Wälzlagern sowie über einen das Gehäuse 3 axial umgreifenden ringförmigen Abschnitt 10 des Getriebes 8, welcher abschnittsweise an der Außenseite des Gehäuses 3 respektive dessen Außenwandung anliegt. Ersichtlich ist der Rotor 6 über einen in einem Aufnahmeraum 11 des Rotors 6 drehfest eingreifenden Axialzapfen 12 mit dem Getriebe 8 bewegungsgekoppelt, was anhand des nachfolgend beschriebenen Funktionsprinzips näher erläutert wird.

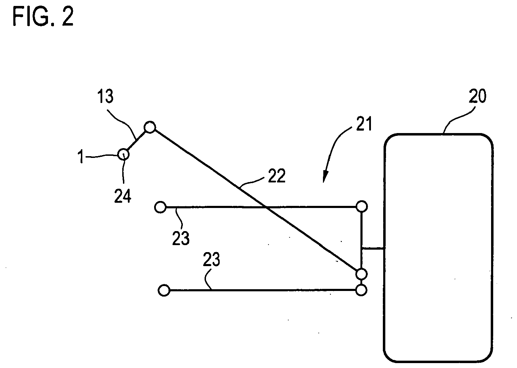

Bei einer Massenbewegung etwa bedingt durch Bewegungen eines Fahrzeugrads 20 (vgl. Fig. 2) wird ein direkt mit einem durch die Massenbewegung bewegbaren Hebelelement 13 verbundenes erstes Getriebeelement in Form des Hohlrads 14 in eine Drehbewegung versetzt. Vorliegend schwenkt das Hebelelement 13 lotrecht zur Bildebene ein und aus, wodurch aufgrund einer drehfesten Verbindung des Hebelelements 13 mit dem Hohlrad 14 das Hohlrad 14 eine Drehbewegung erfährt. Die Drehbewegung überträgt sich auf die auf feststehenden, mit dem Gehäuse 3 verbundenen Stegen 15 angeordneten Planetenräder 16 und weiter auf das Sonnenrad 17. Die Stege 15 sind als Teil eines das Getriebe 8 teilweise umschließenden Getriebegehäuses 18 ausgebildet, wobei das Getriebegehäuse 18 gegebenenfalls eine Vorspannung auf das Getriebe 8 bzw. dessen Komponenten ausüben kann. Das Sonnenrad 17 ist drehfest mit einem Ende des Axialzapfens 12 verbunden, dessen anderes Ende, wie beschrieben, mit dem Rotor 6 verbunden ist, das heißt Drehbewegungen bzw. Drehmomente des Sonnenrads 17 werden auf den Rotor 6 übertragen. Durch die Ausbildung des Getriebes 8 als Planetengetriebe sind Übersetzungen möglich, das heißt bereits kleine Schwenkbewegungen des Hebelelements 13 können zu vergleichsweise großen Drehbewegungen des Sonnenrads 17 und weiter des Rotors 6 relativ zum Stator 5 führen, wodurch der Wirkungsgrad des Dämpfers 1 erheblich verbessert wird.

Mithin kann die bei einem Einfedern etwa einer mit dem elektrischen Dämpfer 1 ausgestatteten Fahrzeugkarosserie entstehende mechanische Energie rückgewonnen bzw. in elektrische Energie umgewandelt werden, welche elektrische Energie beispielsweise über geeignete rotorseitige Anschlussmittel 19 in ein Bordnetz eines Kraftfahrzeugs eingespeist werden kann. Hierfür sind dem Rotor 6 nicht gezeigte Wicklungen zugeordnet. Die Anschlussmittel 19 können etwa in Form eines oder als Teil eines den Axialzapfen 12 lagernden Kommutatorgehäuses ausgebildet sein. Die Rückgewinnung bzw. Umwandlung der mechanischen Energie beruht auf dem Prinzip der magnetischen Induktion, das heißt in Wechselwirkung mit einem Erregermagnetfeld wird durch magnetische Induktion ein Moment entgegengesetzt der Rotation des Rotors 6 erzeugt, welches die Dämpfkraft des Dämpfers 1 darstellt. Gleichermaßen wäre auch eine statorseitige Stromerzeugung denkbar, wenn dieser anstelle des Rotors 6 entsprechende Wicklungen aufweist. Über eine gezielte Bestromung des Generators 2 lassen sich ferner die Dämpfungseigenschaften des Dämpfers 1 einstellen.

Fig. 2 zeigt eine Prinzipdarstellung einer möglichen Verbausituation eines elektrischen Dämpfers 1 im Bereich einer Kraftfahrzeugachse. Gezeigt ist als Teil eines Kraftfahrzeugs ein Rad 20 nebst Radträger 21, an dem eine Schiebestange 22 angeordnet ist, welche mit dem Hebelelement 13 verbunden ist. Das Hebelelement 13 ist um die Drehachse 24 schwenkgelagert, wobei sich in der Drehachse 24 der erfindungsgemäße Dämpfer 1 befindet. Es wäre auch denkbar, den Dämpfer 1 unmittelbar in die Drehaufhängungen wenigstens eines Querlenkers 23 zu integrieren. Federt nun das Fahrzeugrad 20 ein oder aus, wird das Hebelelement 13 über die Schiebestange 22 bewegt und um die Drehachse 24 verschwenkt, worüber der erfindungsgemäße Dämpfer 1 in der beschriebenen Weise betrieben wird.

Ersichtlich weist der erfindungsgemäße Dämpfer 1 einen konstruktiv einfachen Aufbau auf und stellt zudem eine kompakte, auch bei begrenzten Platzverhältnissen einsetzbare Baugruppe dar.

## Patentansprüche

1. Elektrischer Dämpfer zum Dämpfen der Relativbewegung zwischen einer ersten und einer zweiten Masse, umfassend einen durch die Massenbewegung angetriebenen Generator mit einem feststehenden Stator und einem relativ dazu drehbaren Rotor, und ein mit dem Generator gekoppeltes Getriebe, wobei durch die Massenbewegung wenigstens ein direkt mit einem durch die Massenbewegung bewegbaren Hebelelement (13) verbundenes erstes Getriebeelement in eine Drehbewegung versetzt wird, welches erste Getriebeelement mit wenigstens einem weiteren Getriebeelement direkt oder indirekt übersetzt bewegungsgekoppelt ist, wobei das zweite Getriebeelement mit dem Rotor (6) des Generators (2) bewegungsgekoppelt ist, derart, dass eine Drehbewegung des Rotors (6) relativ zum Stator (5) erfolgt, wobei das als Übersetzungsgetriebe ausgeführte Getriebe (8) entweder
- als Planetengetriebe mit einem Hohlrad (14), wenigstens zwei mit dem Hohlrad kämmenden Planetenrädern (16) und einem mit den Planetenrädern (16) kämmenden Sonnenrad (17) ausgebildet ist, wobei das Hohlrad (14) das erste Getriebeelement und das mit dem Rotor (6) bewegungsgekoppelte Sonnenrad (17) das zweite Getriebeelement bildet, oder
- als Spannungswellengetriebe mit einer ring- oder zylinderförmigen flexiblen Einheit mit einer Außenverzahnung, einer das erste Getriebeelement bildenden starren Einheit mit einer mit der Außenverzahnung der flexiblen Einheit kämmenden Innenverzahnung und einem im Inneren der flexiblen Einheit angeordneten, mit der flexiblen Einheit, diese deformierend, zusammenwirkenden, mit dem Rotor bewegungsgekoppelten und das zweite Getriebeelement bildenden ovalen Drehelement ausgebildet ist, oder
- als Zykloidgetriebe ausgebildet ist, mit einer ring- oder zylinderförmigen Einheit, die mit einer randseitig zahnartig profilierten Kurvenscheibe verbunden ist, die ihrerseits mit einem zahnartig profilierten feststehenden Gehäuseteil kämmt, wobei die ring- oder zylinderförmige Einheit das erste Getriebeelement bildet und an der Kurvenscheibe, vorzugsweise in einer Bohrung, das in das erste Getriebeelement eingreifende, mit dem Rotor bewegungsgekoppelte zweite Getriebeelement angeordnet ist,
- **dadurch gekennzeichnet, dass** der Generator (2) ein hohlzylindrisches Gehäuse (3) aufweist, wobei ein erster Gehäuseabschnitt (4) den Rotor (6) und den Stator (5) aufnimmt und ein zweiter Gehäuseabschnitt (7) an das Getriebe (8) anschließt, und dass dem Getriebe (8) ein, der Anbindung des Getriebes am Gehäuse (3) dienender, ringförmiger, das Gehäuse (3) axial wenigstens abschnittsweise umgreifender, wenigstens abschnittsweise an der Gehäuseaußenseite anliegender Abschnitt (10) zugeordnet ist.

2. Elektrischer Dämpfer nach Anspruch 1,
**dadurch gekennzeichnet,**
**dass** der Stator (5) gehäuseinnenwandseitig angeordnet ist.

3. Elektrischer Dämpfer nach Anspruch 1 oder 2,
**dadurch gekennzeichnet,**
**dass** der Rotor (6) eine zylindrische Grundform aufweist.

4. Elektrischer Dämpfer nach einem der vorangehenden Ansprüche,
**dadurch gekennzeichnet,**
**dass** das Gehäuse (3) außenseitig über wenigstens ein Lagerelement (9), insbesondere ein Wälzlager, mit dem Getriebe (8) verbunden ist.

5. Elektrischer Dämpfer nach einem der vorangehenden Ansprüche,
**dadurch gekennzeichnet,**
**dass** das zweite Getriebeelement wenigstens einen Axialzapfen (12) aufweist, der, insbesondere über einen Eingriff in eine rotorseitige axial verlaufende Aufnahme (11), drehfest mit dem Rotor (6) verbunden ist.

6. Elektrischer Dämpfer nach einem der vorangehenden Ansprüche,
**dadurch gekennzeichnet,**
**dass** bei einem als Spannungswellengetriebe ausgebildeten Getriebe zwischen dem ersten und dem zweiten Getriebeelement ein flexibles Wälzlager, insbesondere ein Rollen- oder Nadellager, angeordnet ist.

## Claims

1. Electric damper for damping the relative movement between a first and a second mass, comprising a generator driven by the mass movement having a fixed stator and a rotor rotatable relatively thereto, and a transmission coupled with the generator, wherein by means of the mass movement at least one first gear element connected directly with a lever element (13) movable by means of the mass movement is set in a rotary movement, which first gear element is directly or indirectly translationally movably coupled with at least one further gear element, wherein the second gear element is movably coupled with the rotor (6) of the generator (2) such that a rotary movement of the rotor (6) relative to the stator (5) results,
wherein
the gear (8) designed as transmission gear either
- is designed as a planetary gearing having an annular gear (14), at least two planetary gears (16) engaging with the annular gear and a sun gear (17) engaging with the planetary gears (16), wherein the annular gear (14) forms the first gear element and the sun gear (17) movingly coupled with the rotor (6) forms the second gear element, or
- is designed as a strain wave gearing having a ring- or cylinder-shaped flexible unit with an external toothing, a rigid unit forming the first gear element having an internal toothing engaging with the external toothing of the flexible unit and an oval rotary element, disposed in the interior of the flexible unit, interacting with the flexible unit and deforming the latter, movingly coupled with the rotor and forming the second gear element, or
- is designed as a cycloid gearing, having a ring- or cylinder-shaped unit, which is connected with an edge-sided tooth-like profiled cam plate, which for its part engages with a tooth-like profiled fixed housing part, wherein the ring-or cylinder-shaped unit forms the first gear element and at the cam plate, preferably in a bore, is disposed the second gear element which engages into the first gear element and is movably coupled with the rotor,
- **characterised in that** the generator (2) has a hollow cylindrical housing (3), wherein a first housing section (4) accommodates the rotor (6) and the stator (5) and a second housing section (7) adjoins the transmission (8), and that an annular section (10), serving to connect the transmission to the housing (3), at least sectionally enclosing the housing (3) axially and at least sectionally bearing upon the housing outer surface, is assigned to the transmission (8).

2. Electric damper according to claim 1,
**characterised in**
**that** the stator (5) is disposed at the housing inner wall side.

3. Electric damper according to claim 1 or 2,
**characterised in**
**that** the rotor (6) has a cylindrical basic form.

4. Electric damper according to any of the preceding claims,
**characterised in**
**that** the housing (3) on the outer side is connected via at least one bearing element (9), in particular an antifriction bearing, with the transmission (8).

5. Electric damper according to any of the preceding claims,
**characterised in**
**that** the second gear element has at least one axial pin (12), which, in particular via an engagement into a rotor-side axially extending receptacle (11), is connected non-rotationally with the rotor (6).

6. Electric damper according to any of the preceding claims,
**characterised in**
**that** in the case of a transmission designed as a strain wave gearing, a flexible antifriction bearing, in particular a roller- or pin-bearing, is disposed between the first and the second gear element.

## Revendications

1. Amortisseur électrique pour amortir le déplacement relatif entre une première et une seconde masse, comprenant un générateur commandé par le déplacement des masses avec un stator fixe et un rotor rotatif par rapport à celui-ci, et une transmission couplée au générateur, dans lequel, par le déplacement des masses, au moins un premier élément de transmission directement raccordé à un élément de levier (13) déplaçable par le déplacement des masses est déplacé dans un mouvement rotatif, lequel premier élément de transmission est couplé en mouvement démultiplié directement ou indirectement à au moins un autre élément de transmission, dans lequel le second élément de transmission est couplé en mouvement au rotor (6) du générateur (2) de sorte qu'il se produise un déplacement rotatif du rotor (6) par rapport au stator (5),
dans lequel la transmission (8) en version de transmission d'engrenage ou bien
- se présente sous la forme d'un engrenage planétaire avec une couronne de train planétaire (14), au moins deux pignons satellites (16) s'engrenant sur la couronne de train planétaire et une roue solaire (17) s'engrenant sur les pignons satellites (16), dans lequel la couronne de train planétaire (14) forme le premier élément de transmission et la roue solaire (17) couplée en mouvement avec le rotor (6) forme le second élément de transmission, ou bien
- se présente sous la forme d'une transmission à ondes de tension avec une unité flexible de forme annulaire ou cylindrique avec une denture externe, une unité rigide formant le premier élément de transmission avec une denture interne s'engrenant sur la denture externe de l'unité flexible et un élément rotatif ovale agencé à l'intérieur de l'unité flexible, coopérant avec l'unité flexible en la déformant, couplé en déplacement avec le rotor et formant le second élément de transmission, ou bien
- se présente sous la forme d'un engrenage cycloïdal avec une unité de forme annulaire ou cylindrique, qui est reliée à une came profilée en forme de dents sur le bord, qui s'engrène pour sa part sur une partie de boîtier fixe profilée en forme de dents, dans lequel l'unité de forme annulaire ou cylindrique forme le premier élément de transmission et est agencé sur la came, de préférence dans un orifice qui est ménagé dans le second élément de transmission s'engageant sur le premier élément de transmission et couplé en mouvement avec le rotor,
- **caractérisé en ce que** le générateur (2) présente un boîtier cylindrique creux (3), dans lequel une première section de boîtier (4) reçoit le rotor (6) et le stator (5) et une seconde section de boîtier (7) se raccorde à la transmission (8) et une section (10) destinée à la liaison de la transmission sur le boîtier (3), de forme annulaire, enserrant axialement au moins par sections le boîtier (3) et s'appliquant au moins par sections sur le côté externe du boîtier est affectée à la transmission (8).

2. Amortisseur électrique selon la revendication 1,
**caractérisé en ce que**
le stator (5) est agencé côté paroi interne du boîtier.

3. Amortisseur électrique selon la revendication 1 ou 2,
**caractérisé en ce que**
le rotor (6) présente une forme de base cylindrique.

4. Amortisseur électrique selon l'une quelconque des revendications précédentes,
**caractérisé en ce que**
le boîtier (3) est relié extérieurement à la transmission (8) via au moins un élément d'appui (9), en particulier un appui à rouleaux.

5. Amortisseur électrique selon l'une quelconque des revendications précédentes,
**caractérisé en ce que**
le second élément de transition présente un tourillon axial (12) qui est relié solidaire en rotation au rotor (6) en particulier via un engagement dans un logement s'étendant axialement côté rotor (11).

6. Amortisseur électrique selon l'une quelconque des revendications précédentes,
**caractérisé en ce que**
dans le cadre d'une transmission conformée en transmission à ondes de tension entre le premier et le second élément de transmission est agencé un appui à rouleaux flexible, en particulier un palier à rouleaux ou à aiguilles.
